# EUROPEAN PATENT SPECIFICATION

(11) **EP 4 610 765 B1**
(45) Date of publication and mention of the grant of the patent: **08.04.2026**
(21) Application number: 24159947.1
(22) Date of filing: 27.02.2024
(51) Int. Cl.: G05D 1/698, B64U 101/15, B64U 101/31, F41H 11/02, G05D 101/15, G05D 105/85, G05D 107/00, G05D 109/22

(54) **DISTRIBUTED SENSOR NETWORK IMPLEMENTED BY SWARM OF UNMANNED AUTONOMOUS VEHICLES**
VERTEILTES SENSORNETZWERK, DAS DURCH EINEN SCHWARM UNBEMANNTER AUTONOMER FAHRZEUGE IMPLEMENTIERT IST
RÉSEAU DE CAPTEURS RÉPARTIS MIS EN UVRE PAR ESSAIM DE VÉHICULES AUTONOMES SANS PILOTE

(43) Date of publication of application: 03.09.2025
(73) Proprietor: Alpine Eagle GmbH, 80538 Munich (DE)
(72) Inventor: BOELENS, Jan Hendrik, 80538 Munich (DE); BREUER, Timo, 80538 Munich (DE)
(74) Representative: Isarpatent

(56) References cited:
- US-A1- 2009 087 029
- US-A1- 2022 055 749
- US-B1- 11 493 938

## Description

### TECHNICAL FIELD OF THE INVENTION

The invention relates to a distributed sensor network made up from cooperatively acting unmanned autonomous vehicles for purposes of surveillance and/or defence against intrusion into a protected space. The invention further relates to a method for operating a swarm of unmanned autonomous vehicles as surveillance and/or intrusion defence network.

### TECHNICAL BACKGROUND

Man-made autonomous vehicles that are capable of carrying out operations in a space remote from direct human influence and without requiring a human crew on board of the autonomous vehicle are called unmanned autonomous vehicles (UAVs). Such UAVs are equipped with sophisticated technology to create a complex system drawing on multiple sources of advanced system components in the field of-amongst others - mechanics, propulsion technology, control systems, sensor technology and communication.

In order to facilitate autonomous behaviour a key feature of UAVs is intelligence: The ability to autonomously and quickly make decisions based on collection, dissemination, evaluation and prioritization of detection parameters of the surrounding dynamic environmental conditions. Such intelligence allows UAVs to stay in the OODA loop, i.e. to repeatedly observe the surroundings (O), orient themselves (O), make a decision (D) and to act accordingly (A).

Swarms of UAVs equipped with corresponding technology may be employed as defence assets in modern combat situations. For example, Kang, Younin, "Combat Identification Using Multiple TUAV Swarm" (2008), Theses and Dissertations, 2810 (https://scholar.afit.edu/etd/2810) discloses simulation models of a tactical unmanned aerial vehicle systems with varying degrees of sensor quality.

Zhou, Yongkun, Bin Rao, and Wei Wang, "UAV swarm intelligence: Recent advances and future trends" IEEE Access 8 (2020): 183856-183878 discusses insights in latest technologies in UAV swarm intelligence. Bürkle, Axel, Florian Segor, and Matthias Kollmann, "Towards autonomous micro UAV swarms", Journal of intelligent & robotic systems 61 (2011): 339-353 discloses swarms of commercially available quadrocopters enhanced with on-board processing and communication units enabling full autonomy of individual drones. Bürkle, Axel, "Collaborating miniature drones for surveillance and reconnaissance", Unmanned/Unattended Sensors and Sensor Networks VI, SPIE (2009): Vol. 7480, discloses the evaluation of different cooperation strategies for teams of UAVs with an agent based simulation tool. Allen, Timothy J., "Design and Test of a UAV Swarm Architecture over a Mesh Ad-Hoc Network" (2018), Theses and Dissertations, 1871 (https://scholar.afit.edu/etd/1871) discloses a swarm architecture of UAVs which collaborate as a team rather than acting as several independent vehicles. Suo, Wenbo, Mengyang Wang, Dong Zhang, Zhongjun Qu, and Lei Yu, "Formation Control Technology of Fixed-Wing UAV Swarm Based on Distributed Ad Hoc Network", Applied Sciences 12, no. 2 (2022): 535 discloses a route-based formation switching and obstacle avoidance method for collaborative operation of a UAV swarm.

US 2022/055749 A1 discloses an unmanned aerial vehicle (UAV) executing a neural network that monitors, in real time, the data stream from a plurality of onboard sensors during navigation to an asset along a preprogrammed flight path and/or during its mission, assisted by high-altitude pseudosatellite ("HAPS") platform. US 2009/0087029 A1 discloses a system to operate real time collaboration and dynamic re-planning for target engagement autonomously between unmanned systems (UMS) based on pre-mission planning profiles generated prior to mission initiation. US 11 493 938 B1 discloses a vision-based wind estimation system for analyzing image data to determine wind velocity at a landing location and determine flight control settings to use during descent for an unmanned aerial vehicle (UAV).

### SUMMARY OF THE INVENTION

One of the objects of the invention is to find improved solutions for creating and maintaining a domain restricted zone with dynamically adaptive extension using a number of cooperatively acting mobile sensor carriers.

This and other objects are achieved by means of a distributed sensor network having the features of claim 1 and a method for operating a swarm of unmanned autonomous vehicles (UAVs) as a distributed sensor network having the features of claim 10.

According to a first aspect of the invention, a distributed sensor network a first plurality of cooperatively acting unmanned autonomous vehicles, UAVs, spatially distributed to create a domain exclusion zone, DEZ formed by the perimeter of the deployed patrolling UAVs. Each of the UAVs includes one or more first sensors configured to gather detection signals from any object entering the DEZ, and a signal processor connected to the one or more first sensors. The signal processor is configured to process the detection signals gathered by the one or more first sensors, to perform object classification, discrimination, and identification, CDI, algorithms on the detection signals, and to output a CDI signal related to the object. Each of the UAVs further includes one or more communication modules coupled to the signal processor. The communication modules are configured to transmit the CDI signal to other UAVs in the first plurality of cooperatively acting UAVs.

According to a second aspect of the invention, a method for operating a swarm of unmanned autonomous vehicles as a distributed sensor network involves the steps of spatially distributing the UAVs to create a domain exclusion zone, DEZ, formed by the perimeter of the deployed patrolling UAVs around a target object under protection; gathering, at each of the UAVs individually, detection signals from any object entering the DEZ using one or more first sensors of the respective UAV; processing, at each of the UAVs individually, the detection signals gathered by the one or more first sensors to perform object classification, discrimination, and identification, CDI, algorithms on the detection signals; and transmitting a CDI signal related to the object on the basis of the performed CDI algorithms to other UAVs in the swarm of UAVs via one or more communication modules of the UAVs.

One of the main ideas of the invention is to provide for a sensor network that has the ability to detect and classify objects intruding into a domain exclusion zone more reliably, at larger distances and without impediments to the line of sight due to environmental obstructions. Advantageously, the swarm of unmanned autonomous vehicles may be deployed in a highly mobile, reconfigurable way, thereby providing for the possibility to create domain exclusion zones for highly mobile assets such as convoys or ships. The flexibility and modularity of the swarm-based approach advantageously increases up-time and eliminates single points of failure.

The UAVs may render deployment of a large number of low-cost sensors and airborne sensor carriers very cost effective in comparison to more sophisticated and therefore more expensive ground-based equipment. The distributed sensor network does not only allow for flexible and reconfigurable physical distribution of deployment locations, but also for the distribution of computation capabilities by co-locating deep reinforcement learning techniques for sensor signal processing with the physically distributed sensors. This creates resilience of the network in hostile environments where static ground-based sensors would be easy to localize and defeat by hostile actors. In particular, denial-of-operation (DOO) attacks through multiple simultaneous attack vectors are very difficult to launch against this distributed sensor network with quickly replaceable sensor platforms.

In various embodiments of the first and/or the second aspect of the invention, the one or more first sensors may include one or more of a phased-array radar, optronics with fixed or variable focal length, radio-frequency analysis sensors, and acoustic sensors.

In some embodiments of the first and/or the second aspect of the invention, the UAVs may be unmanned aerial vehicles, in particular fixed-wing drones. Such UAVs may advantageously be employed to create an aerial exclusion zone, AEZ, and may be impacted even less than other types of UAVs from line-of-sight issues.

In several embodiments of the first aspect of the invention, the communication modules of the UAVs may be configured to establish an ad-hoc mesh communication network between themselves. This lends itself towards a more flexible and self-organizing sensor network in which individual nodes may be easily replaced and/or integrated during operation of the whole network.

In some embodiments of the first aspect of the invention, each UAV may further comprise a central processor and a positioning transceiver. The central processor may be configured to determine relative positioning of the respective UAV with respect to the other UAVs.

In a number of embodiments of the first aspect of the invention, each UAV may further comprise one or more second sensors configured to detect environmental parameters. The central processor may be configured to employ deep-reinforcement learning-based algorithms for navigation planning of the UAV on the basis of detected environmental parameters and the determined relative positioning of the respective UAV.

In various embodiments of the first aspect of the invention, the distributed sensor network may further comprise one or more tethered UAVs powered through a ground-based power supply. The tethered UAVs may each include one or more of the first sensors configured to gather detection signals from any object entering the DEZ.

In several embodiments of the first aspect of the invention, the signal processor of each UAV may further include an encryption module configured to encrypt the generated CDI signals.

In various embodiments of the second aspect of the invention, the method may further include a step of determining relative positioning of the UAVs with respect to one another on the basis of positioning signals gathered by positioning receivers in each of the UAVs.

In some embodiments of the second aspect of the invention, the UAVs may establish an ad-hoc mesh communication network between themselves for transmitting the CDI signals. This lends itself towards a more flexible and self-organizing sensor network in which individual nodes may be easily replaced and/or integrated during operation of the whole network.

In various embodiments of the second aspect of the invention, the method may further include a step of operating one or more ground-based effectors and/or airborne effectors to defeat the object on the basis of the CDI signal related to the object transmitted by the swarm of UAVs via the one or more communication modules of the UAVs to a ground-based station.

Advantageous configurations and developments will emerge from the further dependent claims and from the description with reference to the figure. The advantageous configurations and developments may be combined with one another as desired where expedient. Further possible configurations, developments and implementations of the invention also encompass combinations, which are not explicitly mentioned, of features of the invention described above or below with regard to the exemplary embodiments. A person skilled in the art here will in particular also add individual aspects as improvements or additions to the respective basic form of the present invention.

### BRIEF SUMMARY OF THE DRAWINGS

The present invention will be discussed in more detail below on the basis of the exemplary embodiments shown in the schematic figures. In the figures:
Fig. 1 schematically illustrates a domain restricted zone spanned up by a swarm of unmanned autonomous vehicles according to some embodiments of the invention.
Fig. 2 schematically illustrates a functional block diagram of an unmanned autonomous vehicle according to some embodiments of the invention.
Fig. 3 shows a schematic flowchart of the steps of a method for operating a swarm of unmanned autonomous vehicles as distributed sensor network according to some embodiments of the invention.

The appended figures are intended to provide improved understanding of the embodiments of the invention. They illustrate embodiments and serve, in conjunction with the description, for the explanation of principles and concepts of the invention. Other embodiments, and many of the stated advantages, will emerge with regard to the drawings. The elements of the drawings are not necessarily shown true to scale relative to one another. Direction-indicating terminology such as, for instance, "top", "bottom" "left", "right", "above" "below", "horizontal", "vertical", "front", "rear" and similar indications are used only for explanatory purposes and do not serve to restrict the generality to specific configurations as shown in the figures.

In the figures of the drawing, elements, features and components that are identical, functionally identical and of identical action are denoted in each case by the same reference signs unless stated otherwise.

### DESCRIPTION OF EXEMPLARY EMBODIMENTS

The following examples and embodiments are described in the context of unmanned aerial vehicles, however, it should be noted that analogous consideration apply with respect to other types of self-propelled and autonomously acting vehicles as well, such as, but not limited to, unmanned ground-based vehicles (UGV), unmanned legged locomotion vehicles, unmanned waterborne vehicles, unmanned underwater vehicles, unmanned spacecraft, or even unmanned guided vehicles, i.e. vehicles the path of motion of which is physically predetermined by mechanical constraints like tracks/rails or logically predetermined by constrained programming to follow a predetermined movement path/pattern. Swarms of unmanned autonomous vehicles (UAVs) within the meaning of the present disclosure may include one or more pluralities of UAVs of the same vehicle type or one or more pluralities of UAVs of mutually different vehicle types acting together in a swarm.

Surveillance of a physical space in natural environments usually involves a number of detection sensors based on various detection technologies, such as for example vision and imaging sensors (e.g. radar, lidar, infrared sensors, UV sensors, cameras), pressure sensors (e.g. acoustic sensors), temperature sensors, humidity sensors, particle sensors, or electromagnetic. Such sensors may be employed as static sensors in fixed position with respect to the ground. While such ground-based sensors may be networked, they may suffer from limited detection capabilities, for example due to lines of sight obstructed by environmental natural or man-made objects, due to deteriorating signal-to-noise ratios with increasing distance to the space under surveillance, due to excessive deployment times, or due to lack of adaptability to changing environmental detection conditions. Moreover, ground-based sensor networks may more easily fall prey to disablement by adversarial forces due to their lack of mobility and the concomitant ease of detection.

The present invention envisages a distributed sensor network (DSN) implemented by multiple unmanned autonomous vehicles (UAVs), for example small fixed-wing drones, that are deployed as sensor carriers. In particular, the DSN may be an aerial distributed sensor network (ASDN) that may employ airborne sensor carriers (ASCs) to dynamically create and uphold a domain exclusion zone (DEZ) in which drones, loitering munitions and other types of airborne threats (referred to as "hostile drones" hereafter) may be detected, classified, discriminated and eventually neutralized. Unlike contemporary sensor networks relying on a limited number of spatially static sensors in predetermined and fixed locations, the ADSN presented in this disclosure is more resilient against loss of single sensors, is not disadvantaged due to line-of-sight issues from the terrain, and increases the detection and classification range of its sensors.

A DEZ may be formed by the perimeter of deployed patrolling UAVs, creating a "virtual dome" over an area to be protected. DEZs may be characterized by a stringent implementation of direct and often lethal use of force against any agent that violates the terms of the DEZ, regardless of belligerency or neutrality. Unlike solely ground-based systems, ASCs may be deployed at a significant distance from objects to be protected, thereby creating a larger effective DEZ around the object. The DEZ may not only prevent physical intrusion of an object into the protected space, but also may interfere with the ability of objects to gather information from within the DEZ, for example by employing electronic warfare (EW) measure to disturb electronic functions of the object.

The ASC are connected though communication systems, and sensor data is fused within the ADSN in order to create a common situational awareness that is presented to a human operator of the ADSN. Multiple ASC within the ADSN can cooperate by combining their sensor assets in order to better detect, classify, track or defeat hostile drones. Once an intruding object is detected, classified and tracked by the ADSN, the track can be handed off to an external information system, for example a battle management system, or to a physical or electronic defence system using one or multiple effectors in order to engage and defeat the intruding object. Since the ADSN has a flexible spatial distribution of its ASCs, the defeat mechanisms do not need to be co-located with the sensors, thereby increasing the effective engagement range of the effectors of the physical or electronic defence system.

In some implementations, the ADSN may be augmented by ground-based sensor nodes. Moreover, in some implementations, coordination and/or data fusion may be performed by one or more ground-based control stations. Such ground-based control stations may also serve as a management and supervision tool for the operation of the ASCs through a human station operator.

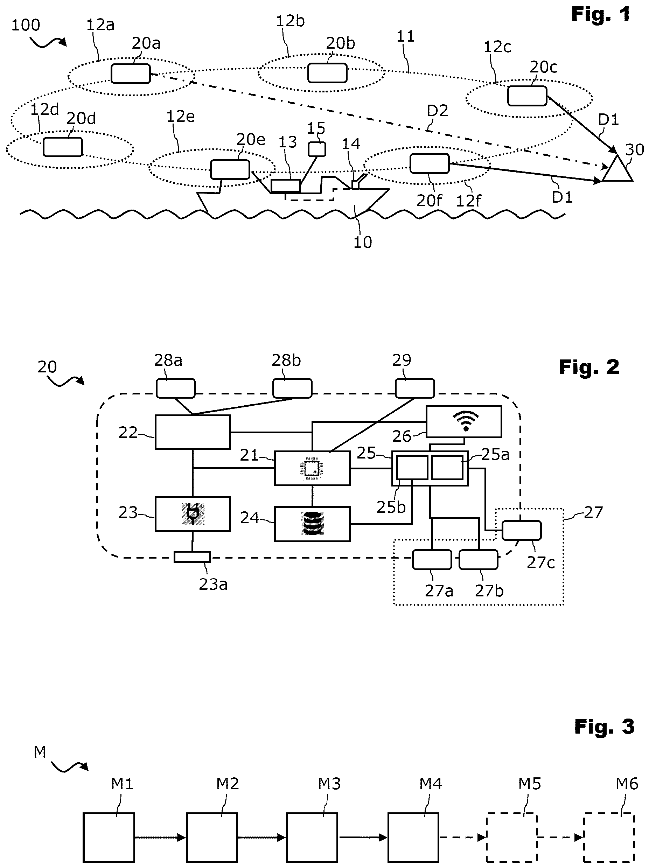

Fig. 1 schematically illustrates a domain restricted zone (DEZ) 11 that is spanned by a swarm of unmanned autonomous vehicles 20a to 20f around an asset under protection. In the example of Fig. 1, the DEZ 11 is an aerial exclusion zone (AEZ) maintained by a swarm of unmanned aerial vehicles 20a to 20f that are acting cooperatively in a distributed sensor network (DSN) 100 to protect a maritime vessel 10 as an example of an asset under protection.

Each of the UAVs 20a to 20f defines a local monitoring zone 12a to 12f, respectively, around its local position. The number of UAVs 20a to 20f in the swarm is only exemplarily depicted as six, however, any other number larger or lower than six may be employed as well. Moreover, a swarm of UAVs may consist of more UAVs than in operation at any given time in order to have redundant UAVs to take the place of any of the UAVs 20a to 20f that needs to refuel, recharge, undergo maintenance, or which is otherwise inoperative or defective. If one of the UAVs 20a to 20f gets lost, needs to return to ground, loses functionality at least partly, or is defective, the remaining UAVs may communicate the dropout among each other and may automatically reconfigure their physical distribution in order to compensate the loss of swarm performance in an optimal manner. The UAVs 20a to 20f may also automatically schedule and coordinate appropriate time slots for recharging, refueling and other types of pre-planned ground maintenance.

The UAVs 20a to 20f may for example be relatively small unmanned aerial systems with vertical, conventional or catapult-assisted take off and landing capabilities. The UAVs 20a to 20f maybe configured to engage in cruise flight around a loitering position in the air, for example by means of wingborne fixed wing flight. In some cases, the swarm may additionally employ a number of additional UAVs 15 having a ground-tether for a ground-based power supply. Such tethered UAVs 15 have a limited mobility due to the tether, but may be employed for a prolonged operation time without the need to refuel or recharge on the ground. Tethered UAVs 15 may augment the UAVs 20a to 20f, for example as stationary sensors and/or data relay nodes. Tethered UAVs 15 may, in some cases, reach higher altitudes than fixed mounting systems such as masts or posts for mounting network equipment.

The UAVs 20a to 20f and - eventually - the tethered UAVs 15 work in tandem to detect, classify and identify unknown objects 30, such as hostile drones, missiles or other man-made flying object, but also other natural objects such as birds or other animals, by gathering detection signals D1 and D2 from various distances. For example, the detection signals D1 may be optical or acoustic signals gathered from optical or acoustic sensors from a shorter distance to the object 30, while the detection signals D2 may be gathered, for example, via phased radar arrays from a longer distance to the object 30.

The DSN 100 may also include a ground-based control station (GCS) 13 as one of the network nodes, for example one or more interconnected computer systems with multiple output devices, such as displays and speakers, and various user input devices. The GCS 13 may be configured to enable human operators to manage the DSN as a holistic distributed sensor system, rather than controlling each of the UAVs 20a to 20f individually. The GCS 13 enables the human operator to manage the DSN 100 on a higher hierarchical operational strategy level rather than to micromanage each UAV individually. Algorithms deployed onto the GCS 13 and each of the individual UAVs 20a to 20f compute the required low-level instructions for the overarching hierarchical operational strategy based on the operator-provided mission planning. In addition, the GCS 13 enables the human operator to interact with the DSN 100 by defining and activating different types of policies and modes that trigger different types of behaviours within the DSN 100.

The GCS 13 may provide the operator with a situational awareness picture that includes processed and fused detection signals from all UAVs 20a to 20f (and/or 15) within the DSN 100. This situational awareness picture may be enriched by data received from external sources via external data communication interfaces. The GCS 13 may be equipped with a satellite communication system to complement any other communication systems. While the satellite communication system may have a relatively low bandwidth, it provides for a redundant communication pathway that is very resilient against jamming. This satellite communication system may be used as a means for maintaining command and control (C2) as well as data communication within the DSN 100, even when operating in heavily contested/denied environments.

The UAVs 20a to 20f are capable of creating an ad-hoc mesh communication network among each other, enabling them to synchronize time and data between them with low latency and high bandwidth. This mesh network may be augmented by other types of high-bandwidth network technology, such as high-speed commercial mobile communications networks or satellite communication networks.

Fig. 2 schematically illustrates a high-level functional block diagram of the main components of a UAV 20. Any of the UAVs 20a to 20f as well as the tethered UAV 15 of Fig. 1 may be implemented in line with the various features of the UAV 20 as shown in and explained in conjunction with Fig. 2.

The exemplary UAV 20 includes a central processor 21, a vehicle controller 22 coupled to the central processor 21, an energy storage module 23, a data storage 24, a signal processor 25 coupled to the central processor 21, and a communication module 26 coupled to both the central processor 21 and the signal processor 25. The central processor 21 may be a high-performance computation unit (HCPU), for example a field-programmable gate array (FPGA), an application specific integrated circuit (ASIC), a programmable logic device (PLD), a microcontroller, a microprocessor or any similar device having generic programmable computational capability. The central processor 21 is coupled to the vehicle controller 22 which in turn is connected to vehicle drives 28a and positioning devices 28b. The vehicle drives 28a may - in the case of unmanned aerial vehicles 20 - be for example helicopter rotors, jet engines, wing control systems or any other similar mechanical equipment used to propel and levitate the UAV 20. The vehicle controller 22 sends appropriate control signals to the vehicle drives 28a in order to keep the UAV 20 on its intended pathway.

The central processor 21 may deploy path-planning algorithms based on deep-reinforcement learning, for example taking into account positioning information of the positioning devices 28b. The positioning devices 28b may for example be satellite positioning information transceivers or local positioning sensors like gyros, magnetic field sensor, accelerometers or similar. The path-planning algorithms employed by the central processor 21 may use pre-trained artificial neural networks to optimize sensor coverage by optimizing the physical distribution of the UAVs 20a to 20f of Fig. 1 and instruct the vehicle controller 22 with corresponding information so that the UAV 20 may be steered in the intended manner.

In order to navigate and determine the position of the UAV 20 under adversarial conditions in the immediate surroundings, for example in areas where satellite data based navigation may not be fully relied upon, the UAV 20 may have high-frequency positioning transceivers as positioning devices 28b that enable them to determine relative positioning with respect to other UAVs 20 and/or with respect to a GCS 13. In particular, the local monitoring zone 12 of one UAV 20 may be located in an area with entirely adversarial conditions whereas another UAV 20 of the swarm may operate in a local monitoring zone 12 less contested. By using high-frequency relative positioning, the UAV 20 and/or the GCS 13 with better position accuracy may provide assistance to the UAV 20 in the contested local monitoring zone 12 to alleviate the problems in reliable relative positioning.

Moreover, the path-planning algorithms employed by the central processor 21 enable dynamic and automatic reconfiguration of the network configuration when the DSN 100 encounters a change in the monitoring conditions, or when the human operator decides to change the deployment through the GCS 13. The path-planning algorithms may also take into account geographic features, atmospheric and space weather conditions, and data relayed from external sources to the DSN 100, for example mapping data, data on man-made structures in the surroundings, current air traffic data in the vicinity and similar.

The energy storage module 23 may for example be a storage facility for electric energy, such as an accumulator or any other rechargeable or replaceable battery. The energy storage module 23 may provide energy to power the various components of the UAV 20, such as for example the vehicle controller 22, the central processor 21, the communication module 26 and the signal processor 25. In order to be able to recharge the energy storage module 23, the UAV 23 may have an external charging interface 23a coupled to the energy storage module 23.

The signal processor 25 is connected to a sensor assembly 27 of the UAV 20. The sensor assembly 27 may include various sensors, for example first sensors 27a, 27b configured to gather detection signals from any object 30 entering the DEZ 11 and second sensor 27c configured to detect environmental parameters in the surroundings of the UAV 20. The signal processor 25 may include a sensor data processing unit 25a, for example a graphics processing unit (GPU) that enables the signal processor 25 to perform significant amounts of on-board processing for purposes of classification, discrimination, and identification (CDI). This reduces the need for high-bandwidth communication, while also enabling the use of sensor data from other UAVs 20 to leverage CDI results delivered as a secondary source of external data on any object 30 under surveillance.

The first sensors 27a, 27b may for example be phased-array radar system, high-resolution optronics with fixed or variable focal length for various spectral ranges like daylight, ultraviolet and/or infrared, passive radio-frequency spectrum analysis systems configured to localize radio-frequency emissions originating from intruding objects 30, acoustic sensor systems like for example microphone arrays or ultrasound detectors, passive radar systems, or any other suitable sensor for gathering detection signals from objects 30 in the vicinity or within the DEZ 11.

For example, active phased-array radar system may be used to detect and classify hostile drones, based on drone signature data. In particular, the active phased-array radar systems may be used to distinguish between man-made aerial objects like drones and naturally occurring objects like birds. Specifically, the active phased-array radar systems allows determining bearing, range and relative velocity data of the aerial objects.

High-resolution fixed focal length optronics may be employed to visually detect aerial objects, either using daylight cameras or infrared cameras. Specifically, if a single fixed focal length optronics system is fitted to an UAV 20, it allows the UAV 20 to determine bearing data of the aerial object. If multiple fixed focal length optronics systems are fitted to an UAV 20, it allows the UAV 20to also determine range and velocity data on the aerial object. On the other hand, high-resolution optronics with variable focal length, i.e. with high optical zoom capability, may aid in classification of aerial object and discrimination between military and civil drones. After detection of an aerial object by the UAV 20, the zoom optics may be used to classify and thereby assess the threat level of the aerial object.

Radio-frequency (RF) spectrum analysis systems can be employed to either detect remote control system emissions used by an operator to communicate with a controllable aerial object, or to detect radio frequency emissions by a controllable aerial object for data communication or electronic warfare purposes. In addition, the UAV 20 uses the RF spectrum analysis system to determine bearing data on a controllable aerial object and to gather RF signature data for classification purposes.

Acoustic sensors may be used to detect controllable aerial objects. Specifically, the rotor/propeller noise of an unmanned aerial vehicle may be detected and used to classify the type of controllable aerial objects. An acoustic sensor array may be deployed on an UAV 20 to determine bearing and range data of controllable aerial objects.

Passive radar systems may be used to detect characteristic signatures in the RF spectrum of an airborne object in order to facilitate classification thereof.

The UAV 20 uses the sensor data processing unit 25a of the signal processor 25 to perform sensor data processing on board of the UAV 20 so that large quantities of raw sensor data may be condensed into CDI signals related to the object 30, thereby reducing the amount of data communicated to other UAVs 20 by means of the communication module 26. On the other hand, the signal processor 25 may receive CDI signals of other UAVs 20 on the same object 30 and take such received CDI signals into account when executing CDI algorithms on its own gathered sensor data. CDI algorithms additionally optimize for maintaining tracks and determining aerial object type by dynamically allocating available sensor assets within the DSN 100. The algorithms deployed on the signal processor 25 are configured to share already evaluated sensor data as CDI signal tracks for optimization within the DSN 100. On the other hand, upon temporarily losing connectivity among parts of the DWN 100, the UAV 20 is nevertheless capable of taking decisions on its own CDI signals.

The signal processor 25 may calculate location, velocity vector and/or type of any encountered object 30 using the aggregated sensor data of multiple UAVs 20 within the DSN 100 received as shared CDI signals, leveraging the physical distribution of other UAVs 20 in the swarm. Thereby, detection and tracking gets more accurate due to achieving higher plausibility ratings of the CDI due to reliance on multiple distributed sensor sources.

Sharing CDI signals by the signal processor 25 may be done in encrypted format in order to secure the data against eavesdropping. To that end, the signal processor 25 may include an encryption module 25b configured to encrypt the CDI signals generated by the sensor data processing unit 25a. The communication module 26 may then send out the encrypted CDI signals to other UAVs 20 which may decrypt the received encrypted CDI signals in their encryption module 25b. For example, the encryption/decryption may be performed using public/private key pairs in each of the UAVs 20.

The data storage 24 may store configuration data for operating all electronic components of the UAV 20. Amongst others, the data stored in the data storage 24 may also include lists of encryption/decryption keys and an internal, distributed registry of its own and other friendly assets ("white list") in order to distinguish between hostile and non-hostile objects 30. In addition to the white list data, the communication module 26 may also deploy a radio-frequency based interrogation system in order to establish a friend/foe discrimination by contacting any actively operating aerial object.

The UAVs 20 may use the shared CDI signals to provide tracks of objects classified as hostile or adversarial to external information management or air defence systems, and/or to effectors within the DSN 100 through an external data communication system. For example, ground-based static effectors 14 (as exemplarily shown in Fig. 1) may be used to defeat the object 30. Such effectors may be, inter alia, ground-based jamming equipment which is intended to jam either the navigation signals or the remote-control signals of a hostile object 30. Alternatively, such systems can be used to manipulate these signals in ways that allow the flight path of the drone to be altered. Effectors 14 may also include electromagnetic pulse systems that can be used to interfere with the onboard electronics of the hostile object 30. Moreover, kinetic effectors 14 may be deployed to physically engage the hostile object 30, for example using ballistic ammunition like grenades, rocket, missiles, or bullets. A further example, of an effector 14 may be laser-based or directed energy weapons or kamikaze drones used as kinetic interceptors.

Additionally, the DSN 100 may include airborne effector carriers (AEC), i.e. small unmanned aerial vehicles that are either designed to kinetically defeat hostile objects 30 directly, or to carry kinetic or explosive payloads, netguns, radio-frequency emitter systems for jamming or manipulating radio-frequency control signals of a hostile object 30 or optical jamming systems for interfering with the onboard optical sensors of a hostile object 30. Such airborne effectors 29 may also be employed on board of a UAV 20.

While not explicitly shown in Fig. 1, the DSN 100 may additionally include one or more automated ground deployment units (AGDU). AGDUs act as storage hangars for the UAVs 20a to 20f, the tethered UAV 15 and potentially the AECs, while also providing automatic start and recovery mechanisms, and including recharging/refuelling capabilities. Such an AGDU may be managed by a human operator through the GCS 13.

Fig. 3 shows a schematic flowchart of the steps of a method M for operating a swarm of unmanned autonomous vehicles (UAV) as distributed sensor network. For example, the method M may be performed using a DSN 100 as depicted in and explained in conjunction with Fig. 1. The UAVs as used in the method M may be implemented with any or all of the features of the UAV 20 as depicted in and explained in conjunction with Fig. 2.

In a first stage M1, the UAVs 20a to 20f are spatially distributed to create a domain exclusion zone (DEZ) 11, around a target object 10 under protection. The UAVs 20a to 20f may for example be unmanned aerial vehicles such as fixed-wing drones. In a second stage M2, at each of the UAVs 20a to 20f individually, detection signals are gathered from any object 30 entering the DEZ 11 using one or more first sensors 27a, 27b of the respective UAV 20a to 20f. The first sensors 27a, 27b may for example be phased-array radars, optronics with fixed or variable focal length, radio-frequency analysis sensors, and/or acoustic sensors.

At each of the UAVs 20a to 20f individually, the detection signals gathered by the one or more first sensors 27a, 27b are used in a third stage M3 to perform object classification, discrimination, and identification, CDI, algorithms on the detection signals. CDI signals related to the object 30 that are generated on the basis of the performed CDI algorithms are transmitted in a fourth stage M4 to other UAVs 20a to 20f in the swarm of UAVs via one or more communication modules 26 of the UAVs 20a to 20f. To that end, the UAVs may establish an ad-hoc mesh communication network between themselves for sharing the CDI signals.

Optionally, in a fifth stage M5 the relative positioning of the UAVs 20a to 20f with respect to one another on the basis of positioning signals gathered by positioning receivers in each of the UAVs 20a to 20f. Moreover, a further optional stage M6 involves operating one or more ground-based effectors 14 to defeat the object 30 on the basis of the shared CDI signals related to the object 30. Those shared CDI signals related to the object 30 are transmitted by the swarm of UAVs 20a to 20f via the one or more communication modules 26 of the UAVs 20a to 20f to a ground-based station 13 which in turn relays control signals to the effector 14 in order to properly engage the object 30 to be defeated.

In order to improve the stringency of the representation, various features were combined in one or more examples in the detailed description above. However, it should be clear in this case that the description above is only of an illustrative and in no way restrictive nature. It is used to cover all alternatives, modifications and equivalents of the various features and exemplary embodiments. Many other examples will be immediately and directly clear to a person skilled in the art on the basis of his technical knowledge in view of the description above.

The exemplary embodiments were chosen and described in order to be able to represent the principles on which the invention is based and their possible uses in practice in the best possible manner. As a result, experts may optimally modify and use the invention and its various exemplary embodiments for the intended purpose. In the claims and the description, the terms "containing" and "having" are used as neutral concepts for the corresponding term "comprising". Furthermore, use of the terms "a", "an" and "one" is not intended to fundamentally exclude a plurality of features and components described in such a way.

## Claims

1. Distributed sensor network (100), comprising a first plurality of cooperatively acting unmanned autonomous vehicles, UAVs (20; 20a-20f), spatially distributed to create a domain exclusion zone, DEZ (11), formed by the perimeter of the deployed patrolling UAVs (20; 20a-20f), each UAV (20; 20a-20f) comprising:
one or more first sensors (27a; 27b) configured to gather detection signals from any object (30) entering the DEZ (11);
a signal processor (25) connected to the one or more first sensors (27a; 27b) and configured to process the detection signals gathered by the one or more first sensors (27a; 27b), to perform object classification, discrimination, and identification, CDI, algorithms on the detection signals, and to output a CDI signal related to the object (30); and
one or more communication modules (26) coupled to the signal processor (25) and configured to transmit the CDI signal to other UAVs (20; 20a-20f) in the first plurality of cooperatively acting UAVs (20; 20a-20f).

2. Distributed sensor network (100) according to claim 1, wherein the one or more first sensors (27a; 27b) include one or more of a phased-array radar, optronics with fixed or variable focal length, radio-frequency analysis sensors, and acoustic sensors.

3. Distributed sensor network (100) according to one of the claims 1 and 2,
wherein the UAVs (20; 20a-20f) are unmanned aerial vehicles.

4. Distributed sensor network (100) according to claim 3, wherein the unmanned aerial vehicles are fixed-wing drones.

5. Distributed sensor network (100) according to one of claims 3 to 4, wherein the communication modules (26) of the UAVs (20; 20a-20f) are configured to establish an ad-hoc mesh communication network between themselves.

6. Distributed sensor network (100) according to one of the claims 1 to 4, wherein each UAV (20; 20a-20f) further comprises a central processor (21) and a positioning transceiver, the central processor (21) being configured to determine relative positioning of the respective UAV (20; 20a-20f) with respect to the other UAVs (20; 20a-20f).

7. Distributed sensor network (100) according to claim 6, wherein each UAV (20; 20a-20f) further comprises one or more second sensors (27c) configured to detect environmental parameters, and wherein the central processor (21) is configured to employ deep-reinforcement learning-based algorithms for navigation planning of the UAV (20; 20a-20f) on the basis of detected environmental parameters and the determined relative positioning of the respective UAV (20; 20a-20f).

8. Distributed sensor network (100) according to one of the claims 1 to 7, further comprising one or more tethered UAVs (15) powered through a ground-based power supply, the one or more tethered UAVs (15) comprising one or more of the first sensors (27a; 27b) configured to gather detection signals from any object (30) entering the DEZ (11).

9. Distributed sensor network (100) according to one of the claims 1 to 8, wherein the signal processor (25) of each UAV (20; 20a-20f) further includes an encryption module (25b) configured to encrypt the generated CDI signals.

10. Method (M) for operating a swarm of unmanned autonomous vehicles, UAVs (20; 20a-20f), as distributed sensor network (100), the method (M) comprising:
spatially distributing (M1) the UAVs (20; 20a-20f) to create a domain exclusion zone, DEZ (11), formed by the perimeter of the deployed patrolling UAVs (20; 20a-20f) around a target object (10) under protection;
gathering (M2), at each of the UAVs (20; 20a-20f) individually, detection signals from any object (30) entering the DEZ (11) using one or more first sensors (27a; 27b) of the respective UAV (20; 20a-20f);
processing (M3), at each of the UAVs (20; 20a-20f) individually, the detection signals gathered by the one or more first sensors (27a; 27b) to perform object classification, discrimination, and identification, CDI, algorithms on the detection signals; and
transmitting (M4) a CDI signal related to the object (30) on the basis of the performed CDI algorithms to other UAVs (20; 20a-20f) in the swarm of UAVs (20; 20a-20f) via one or more communication modules (26) of the UAVs (20; 20a-20f).

11. Method (M) according to claim 10, further comprising:
determining (M5) relative positioning of the UAVs (20; 20a-20f) with respect to one another on the basis of positioning signals gathered by positioning receivers in each of the UAVs (20; 20a-20f).

12. Method (M) according to claim 10 or 11, wherein the one or more first sensors (27a; 27b) include one or more of a phased-array radar, optronics with fixed or variable focal length, radio-frequency analysis sensors, and acoustic sensors.

13. Method (M) according to one of the claims 10 to 12, wherein the UAVs (20; 20a-20f) are unmanned aerial vehicles, in particular fixed-wing drones.

14. Method (M) according to claim 13, wherein the UAVs (20; 20a-20f) establish an ad-hoc mesh communication network between themselves for transmitting (M4) the CDI signals.

15. Method (M) according to one of the claims 10 to 14, further comprising:
operating (M6) one or more ground-based effectors (14) to defeat the object (30) on the basis of the CDI signal related to the object (30) transmitted by the swarm of UAVs (20; 20a-20f) via the one or more communication modules (26) of the UAVs (20; 20a-20f) to a ground-based station (13).

## Patentansprüche

1. Verteiltes Sensornetzwerk (100), umfassend eine erste Mehrzahl von zusammenwirkend agierenden unbemannten autonomen Fahrzeugen, UAVs (20; 20a-20f), die räumlich verteilt sind, um eine Domänenausschlusszone, DEZ (11) zu schaffen, die durch den Umkreis der eingesetzten Patrouillen-UAVs (20; 20a-20f) gebildet ist, wobei jedes UAV (20; 20a-20f) umfasst:
einen oder mehrere erste Sensoren (27a; 27b), die dazu eingerichtet sind, Detektionssignale von jedem beliebigen Objekt (30) zu erfassen, das in die DEZ (11) eintritt;
einen Signalprozessor (25), der mit dem einen oder den mehreren ersten Sensoren (27a; 27b) verbunden ist und dazu eingerichtet ist, die durch den einen oder die mehreren ersten Sensoren (27a; 27b) erfassten Detektionssignale zu verarbeiten, um Objektklassifizierungs-, - unterscheidungs- und -identifizierungs-, CDI, -Algorithmen an den Detektionssignalen durchzuführen, und ein CDI-Signal auszugeben, das sich auf das Objekt (30) bezieht; und
ein oder mehrere Kommunikationsmodule (26), die mit dem Signalprozessor (25) gekoppelt und dazu eingerichtet sind, das CDI-Signal an andere UAVs (20; 20a-20f) in der ersten Mehrzahl von zusammenwirkend agierenden UAVs (20; 20a-20f) zu senden.

2. Verteiltes Sensornetzwerk (100) nach Anspruch 1, wobei der eine oder die mehreren ersten Sensoren (27a; 27b) eines oder mehrere von einem Phased-Array-Radar, Optronik mit fester oder variabler Brennweite, Hochfrequenzanalysesensoren und akustischen Sensoren aufweisen.

3. Verteiltes Sensornetzwerk (100) nach einem der Ansprüche 1 und 2, wobei die UAVs (20; 20a-20f) unbemannte Luftfahrzeuge sind.

4. Verteiltes Sensornetzwerk (100) nach Anspruch 3, wobei die unbemannten Luftfahrzeuge Festflügeldrohnen sind.

5. Verteiltes Sensornetzwerk (100) nach einem der Ansprüche 3 und 4, wobei die Kommunikationsmodule (26) der UAVs (20; 20a-20f) dazu eingerichtet sind, untereinander ein Ad-hoc-Mesh-Kommunikationsnetzwerk aufbauen.

6. Verteiltes Sensornetzwerk (100) nach einem der Ansprüche 1 bis 4, wobei jedes UAV (20; 20a-20f) des Weiteren einen Zentralprozessor (21) und einen Positionsbestimmungs-Sender-Empfänger umfasst, wobei der Zentralprozessor (21) dazu eingerichtet ist, eine relative Positionierung des jeweiligen UAV (20; 20a-20f) in Bezug auf die anderen UAVs (20; 20a-20f) zu bestimmen.

7. Verteiltes Sensornetzwerk (100) nach Anspruch 6, wobei jedes UAV (20; 20a-20f) des Weiteren einen oder mehrere zweite Sensoren (27c) umfasst, die dazu eingerichtet sind, Umgebungsparameter zu detektieren, und wobei der Zentralprozessor (21) dazu eingerichtet ist, Deep-Reinforcement Learningbasierte Algorithmen für eine Navigationsplanung des UAV (20; 20a-20f) auf der Grundlage detektierter Umgebungsparameter und der bestimmten relativen Positionierung des jeweiligen UAV (20; 20a-20f) anzuwenden.

8. Verteiltes Sensornetzwerk (100) nach einem der Ansprüche 1 bis 7, das des Weiteren ein oder mehrere kabelgebundene UAVs (15) umfasst, die über eine bodengestützte Stromversorgung mit Strom versorgt werden, wobei das eine oder die mehreren kabelgebundenen UAVs (15) einen oder mehrere der ersten Sensoren (27a; 27b) umfassen, die dazu eingerichtet sind, Detektionssignale von jedem beliebigen Objekt (30) zu erfassen, das in die DEZ (11) eintritt.

9. Verteiltes Sensornetzwerk (100) nach einem der Ansprüche 1 bis 8, wobei der Signalprozessor (25) jedes UAV (20; 20a-20f) des Weiteren ein Verschlüsselungsmodul (25b) aufweist, das dazu eingerichtet ist, die generierten CDI-Signale zu verschlüsseln.

10. Verfahren (M) zum Betreiben eines Schwarms unbemannter autonomer Fahrzeuge, UAVs (20; 20a-20f), als verteiltes Sensornetzwerk (100), wobei das Verfahren (M) umfasst:
räumliches Verteilen (M1) der UAVs (20; 20a-20f), um eine Domänenausschlusszone, DEZ (11) zu schaffen, die durch den Umkreis der eingesetzten patrouillierenden UAVs (20; 20a-20f) um ein zu schützendes Zielobjekt (10) herum gebildet wird;
Erfassen (M2), individuell in jedem der UAVs (20; 20a-20f), von Detektionssignalen von jedem beliebigen Objekt (30), das in die DEZ (11) eintritt, unter Verwendung eines oder mehrerer erster Sensoren (27a; 27b) des jeweiligen UAV (20; 20a-20f);
Verarbeiten (M3), individuell in jedem der UAVs (20; 20a-20f), der durch den einen oder die mehreren ersten Sensoren (27a; 27b) erfassten Detektionssignale zum Durchführen von Objektklassifizierungs-, - unterscheidungs- und -identifizierungs-, CDI, -Algorithmen an den Detektionssignalen; und
Senden (M4) eines CDI-Signals, das sich auf das Objekt (30) bezieht, auf der Grundlage der durchgeführten CDI-Algorithmen an andere UAVs (20; 20a-20f) in dem Schwarm von UAVs (20; 20a-20f) über ein oder mehrere Kommunikationsmodule (26) der UAVs (20; 20a-20f).

11. Verfahren (M) nach Anspruch 10, des Weiteren umfassend:
Bestimmen (M5) der relativen Positionierung der UAVs (20; 20a-20f) in Bezug zueinander auf der Grundlage von Positionsbestimmungssignalen, die durch Positionsbestimmungsempfänger in jedem der UAVs (20; 20a-20f) erfasst werden.

12. Verfahren (M) nach Anspruch 10 oder 11, wobei der eine oder die mehreren ersten Sensoren (27a; 27b) eines oder mehrere von einem Phased-Array-Radar, Optronik mit fester oder variabler Brennweite, Hochfrequenzanalysesensoren und akustischen Sensoren umfassen.

13. Verfahren (M) nach einem der Ansprüche 10 bis 12, wobei die UAVs (20; 20a-20f) unbemannte Luftfahrzeuge, insbesondere Festflügeldrohen, sind.

14. Verfahren (M) nach Anspruch 13, wobei die UAVs (20; 20a-20f) untereinander ein Ad-hoc-Mesh-Kommunikationsnetzwerk zum Senden (M4) der CDI-Signale aufbauen.

15. Verfahren (M) nach einem der Ansprüche 10 bis 14, des Weiteren umfassend:
Betreiben (M6) eines oder mehrerer bodengestützter Effektoren (14) zum Bekämpfen des Objekts (30) auf der Grundlage des CDI-Signals, das sich auf das Objekt (30) bezieht und durch den Schwarm von UAVs (20; 20a-20f) über das eine oder die mehreren Kommunikationsmodule (26) der UAVs (20; 20a-20f) an eine Bodenstation (13) gesendet wird.

## Revendications

1. Réseau de capteurs repartis (100), comprenant une première pluralité de véhicules autonomes sans pilote agissant de manière coopérative, UAV (20 ; 20a-20f), répartis dans l'espace de façon à créer une zone d'exclusion de domaine, DEZ (11) formée par le périmètre des UAV déployés en patrouille (20 ; 20a-20f), chaque UAV (20 ; 20a-20f) comprenant :
un ou plusieurs premiers capteurs (27a ; 27b) configurés pour acquérir des signaux de détection provenant de n'importe quel objet (30) entrant dans la DEZ (11) ;
un processeur de signal (25) connecté aux un ou plusieurs premiers capteurs (27a ; 27b) et configuré pour traiter les signaux de détection acquis par les un ou plusieurs premiers capteurs (27a ; 27b), afin de mettre en œuvre des algorithmes de classification, de discrimination et d'identification, CDI, d'objets sur les signaux de détection, et d'émettre un signal CDI relatif à l'objet (30) ; et
un ou plusieurs modules de communication (26) couplés au processeur de signal (25) et configurés pour transmettre le signal CDI à d'autres UAV (20 ; 20a-20f) parmi la première pluralité d'UAV agissant de manière coopérative (20 ; 20a-20f).

2. Réseau de capteurs repartis (100) selon la revendication 1, dans lequel les un ou plusieurs premiers capteurs (27a ; 27b) comportent un ou plusieurs d'un radar à commande de phase, des éléments optroniques dotés d'une longueur focale fixe ou variable, des capteurs d'analyse de radiofréquence, et des capteurs sonores.

3. Réseau de capteurs repartis (100) selon l'une quelconque des revendications 1 et 2, dans lequel les UAV (20 ; 20a-20f) sont des aéronefs sans pilote.

4. Réseau de capteurs repartis (100) selon la revendication 3, dans lequel les aéronefs sans pilote sont des drones à ailes fixes.

5. Réseau de capteurs repartis (100) selon l'une quelconque des revendications 3 à 4, dans lequel les modules de communication (26) des UAV (20 ; 20a-20f) sont configurés pour établir entre eux un réseau de communication en maille ad hoc.

6. Réseau de capteurs repartis (100) selon l'une quelconque des revendications 1 à 4, dans lequel chaque UAV (20 ; 20a-20f) comprend en outre un processeur central (21) et un émetteur-récepteur de détermination de positionnement, le processeur central (21) étant configuré pour déterminer un positionnement relatif de l'UAV respectif (20 ; 20a-20f) par rapport aux autres UAV (20 ; 20a-20f).

7. Réseau de capteurs repartis (100) selon la revendication 6, dans lequel chaque UAV (20 ; 20a-20f) comprend en outre un ou plusieurs deuxièmes capteurs (27c) configurés pour détecter des paramètres environnementaux et dans lequel le processeur central (21) est configuré pour appliquer des algorithmes à base d'apprentissage de renforcement approfondi pour la planification de la navigation de l'UAV (20 ; 20a-20f) sur la base des paramètres environnementaux détectés et du positionnement relatif déterminé de l'UAV respectif (20 ; 20a-20f).

8. Réseau de capteurs repartis (100) selon l'une quelconque des revendications 1 à 7, comprenant en outre un ou plusieurs UAV filaires (15) alimentés en courant par le biais d'une alimentation en courant basée au sol, les un ou plusieurs UAV filaires (15) comprenant un ou plusieurs des premiers capteurs (27a ; 27b) configurés pour acquérir des signaux de détection provenant de n'importe quel objet (30) entrant dans la DEZ (11).

9. Réseau de capteurs repartis (100) selon l'une quelconque des revendications 1 à 8, dans lequel le processeur de signal (25) de chaque UAV (20 ; 20a-20f) comprend en outre un module de chiffrement (25b) configuré pour chiffrer les signaux CDI générés.

10. Procédé (M) pour faire fonctionner un essaim de véhicules autonomes sans pilote, UAV (20 ; 20a-20f), comme un réseau de capteurs repartis (100), le procédé (M) comprenant :
la repartition dans l'espace (M1) des UAV (20 ; 20a-20f) pour créer une zone d'exclusion de domaine, DEZ (11), formée par le périmètre des UAV déployés en patrouille (20 ; 20a-20f) autour d'un objet cible (10) à protéger ;
l'acquisition (M2), au niveau de chacun des UAV (20 ; 20a-20f) individuellement, de signaux de détection provenant de n'importe quel objet (30) entrant dans la DEZ (11) à l'aide d'un ou plusieurs premiers capteurs (27a ; 27b) de l'UAV respectif (20 ; 20a-20f) ;
le traitement (M3), au niveau de chacun des UAV (20 ; 20a-20f) individuellement, des signaux de détection acquis par les un ou plusieurs premiers capteurs (27a ; 27b) afin de mettre en œuvre des algorithmes de classification, de discrimination et d'identification, CDI d'objets sur les signaux de détection ; et
la transmission (M4) d'un signal CDI relatif à l'objet (30) sur la base des algorithmes CDI mis en oeuvre à d'autres UAV (20 ; 20a-20f) dans l'essaim d'UAV (20 ; 20a-20f) via un ou plusieurs modules de communication (26) des UAV (20 ; 20a-20f).

11. Procédé (M) selon la revendication 10, comprenant en outre :
la détermination (M5) du positionnement relatif des UAV (20 ; 20a-20f) les uns par rapport aux autres sur la base de signaux de détermination de positionnement acquis par des récepteurs de détermination de positionnement dans chacun des UAV (20 ; 20a-20f).

12. Procédé (M) selon la revendication 10 ou 11, dans lequel les un ou plusieurs premiers capteurs (27a ; 27b) comprennent un ou plusieurs d'un radar à commande de phase, des éléments optroniques avec une longueur focale fixe ou variable, des capteurs d'analyse à radiofréquence, et des capteurs sonores.

13. Procédé (M) selon l'une quelconque des revendications 10 à 12, dans lequel les UAV (20 ; 20a- 20f) sont des aéronefs sans pilote, en particulier des drones à ailes fixes.

14. Procédé (M) selon la revendication 13, dans lequel les UAV (20 ; 20a-20f) établissent un réseau de communication maillé ad-hoc entre eux pour transmettre (M4) les signaux CDI.

15. Procédé (M) selon l'une quelconque quelconque des revendications 10 à 14, comprenant en outre :
le fait de faire fonctionner (M6) un ou plusieurs effecteurs basés au sol (14) pour combattre l'objet (30) sur la base du signal CDI relatif à l'objet (30) transmis par l'essaim d'UAV (20 ; 20a-20f) via les un ou plusieurs modules de communication (26) des UAV (20 ; 20a-20f) à une station basée au sol (13).
